# EUROPEAN PATENT APPLICATION

(11) **EP 4 832 429 A1**
(43) Date of publication of application: **28.10.2026**
(21) Application number: 24910697.2
(22) Date of filing: 10.12.2024
(51) Int. Cl.: H04L 27/26

(54) **SENSING COMMUNICATION METHOD, SENSING COMMUNICATION APPARATUS, AND STORAGE MEDIUM**

(30) Priority: 27.12.2023 CN 202311837901
(71) Applicant: ZTE Corporation, Shenzhen, Guangdong 518057 (CN)
(72) Inventor: DUN, Bosen, Shenzhen, Guangdong 518057 (CN); WEI, Hao, Shenzhen, Guangdong 518057 (CN); LI, Ping, Shenzhen, Guangdong 518057 (CN)
(74) Representative: Ziebig Hengelhaupt Intellectual Property Attorneys Patentanwaltskanzlei PartGmbB
(86) International application number: PCT/CN2024/138175
(87) International publication number: WO 2025/139766

(57) **Abstract**

A sensing communication method, a sensing communication apparatus, and a storage medium. The sensing communication method comprises: determining configuration information of a sensing frame; and sending the configuration information of the sensing frame to a second node.

## Description

The present disclosure claims priority to Chinese Patent Application No. 202311837901.1, filed on December 27, 2023, the entire contents of which are incorporated herein by reference.

### TECHNICAL FIELD

The present disclosure relates to the technical field of communications, and in particular, to a sensing communication method, a sensing communication apparatus, and a storage medium.

### BACKGROUND

Integrated sensing and communication means that two functions of communication and sensing are integrated together, so that a future communication system has both functions of communication and sensing. By actively recognizing and analyzing channel characteristics while transmitting information through a wireless channel, the technology senses physical features of the surrounding environment, thereby enhancing the communication function and the sensing function mutually.

### SUMMARY

In one aspect, a sensing communication method is provided. The sensing communication method is applied to a first node, and includes:
determining configuration information of a sensing frame; and
sending the configuration information of the sensing frame to a second node.

In another aspect, a sensing communication method is provided. The sensing communication method is applied to a second node, and includes: receiving configuration information of a sensing frame sent from a first node.

In yet another aspect, a first node is provided. The first node includes: a processing unit and a communication unit; the processing unit is configured to determine configuration information of a sensing frame; and the communication unit is configured to send the configuration information of the sensing frame to a second node.

In yet another aspect, a second node is provided. The second node includes: a processing unit and a communication unit; the communication unit is configured to receive configuration information of a sensing frame sent from a first node.

In yet another aspect, a sensing communication apparatus is provided. The sensing communication apparatus includes: a memory and a processor; where the memory is coupled to the processor; the memory is configured to store computer programs; and the processor, upon executing the computer programs, implements the sensing communication method according to any one of the above aspects.

In yet another aspect, a computer-readable storage medium is provided. The computer-readable storage medium stores computer program instructions, where the computer program instructions, upon being executed by a processor, enable the processor to implement the sensing communication method according to any of the above aspects.

In yet another aspect, a computer program product is provided, where the computer program product includes computer program instructions, in response to the computer program instructions being executed, the sensing communication method according to any of the above aspects is implemented.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of an architecture of a communication system according to some embodiments of the present disclosure.
FIG. 2 is a flowchart of a sensing communication method according to some embodiments of the present disclosure.
FIG. 3 is a schematic diagram of structures of a sensing frame according to some embodiments of the present disclosure.
FIG. 4 is a flowchart of another sensing communication method according to some embodiments of the present disclosure.
FIG. 5 is a flowchart of yet another sensing communication method according to some embodiments of the present disclosure.
FIG. 6 is a flowchart of yet another sensing communication method according to some embodiments of the present disclosure.
FIG. 7 is a flowchart of yet another sensing communication method according to some embodiments of the present disclosure.
FIG. 8 is a flowchart of yet another sensing communication method according to some embodiments of the present disclosure.
FIG. 9 is a flowchart of yet another sensing communication method according to some embodiments of the present disclosure.
FIG. 10 is a flowchart of yet another sensing communication method according to some embodiments of the present disclosure.
FIG. 11 is a flowchart of yet another sensing communication method according to some embodiments of the present disclosure.
FIG. 12 is a schematic diagram of structures of another sensing frame according to some embodiments of the present disclosure.
FIG. 13 is a flowchart of yet another sensing communication method according to some embodiments of the present disclosure.
FIG. 14 is a schematic diagram of structures of yet another sensing frame according to some embodiments of the present disclosure.
FIG. 15 is a flowchart of yet another sensing communication method according to some embodiments of the present disclosure.
FIG. 16 is a schematic diagram of structures of yet another sensing frame according to some embodiments of the present disclosure.
FIG. 17 is a schematic diagram of structures of a first node according to some embodiments of the present disclosure.
FIG. 18 is a schematic diagram of structures of a second node according to some embodiments of the present disclosure.
FIG. 19 is a schematic diagram of structures of a sensing communication apparatus according to some embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplary/exemplarily" or "for example" and variations thereof are used to indicate examples, instances, or illustrations. Any embodiment or design scheme described with the words "exemplary/exemplarily" or "for example" in the present disclosure should not be construed as being more preferred or advantageous than other embodiments or design solutions in the present disclosure. Specifically, the usage of wordings such as "exemplarily" or "for example" is intended to present relevant concepts in a concrete way.

Hereinafter, wordings "first" and "second," etc., are used for descriptive purposes only, and are not to be understood as indicating or implying the relative importance or implicitly indicating a number of indicated technical features. Thus, features limited with the wordings of "first", "second", etc., may explicitly or implicitly include one or more of the features.

In the description of the present disclosure, unless otherwise specified, a character "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

Terms involved in the embodiments of the present disclosure may be explained below to facilitate readers' understanding.

### (1) Integrated sensing and communication (ISAC)

Integrated sensing and communication means that two functions of communication and sensing are integrated together, so that a future communication system has both functions of communication and sensing. By actively recognizing and analyzing channel characteristics while transmitting information through a wireless channel, the technology senses physical features of the surrounding environment, thereby enhancing the communication function and the sensing function mutually.

The integrated sensing and communication technology is realized by using wireless signals transmitted by communication devices. While completing a communication function, the wireless signals may also be used for environment sensing. By collecting and analyzing wireless signals reflected, scattered, and propagated through multiple paths in a surrounding environment, surrounding environment information may be analyzed, so that a network side may quickly make decisions, such as sending a control instruction, triggering an alarm, adjusting a communication rate, and the like.

### (2) Time-domain frame structure

The time-domain frame structure is used to define structure information of a radio resource in time domain. Taking a 5th generation mobile communication technology (5G) new radio (NR) system as an example, a time-domain length of a radio frame is 10 ms. A radio frame includes 10 subframes, that is, a time-domain length of a subframe is 1 ms. According to different subcarrier spacings, a subframe includes a plurality of slots. For example, in a case where a subcarrier spacing is 15 kHz, a subframe includes one slot. In a case where a subcarrier spacing is 30 kHz, a subframe includes two slots. One slot includes 14 orthogonal frequency division multiplexing (OFDM) symbols (normal cyclic prefix (CP)).

Exemplarily, the following is a time division duplex uplink-downlink configuration pattern:

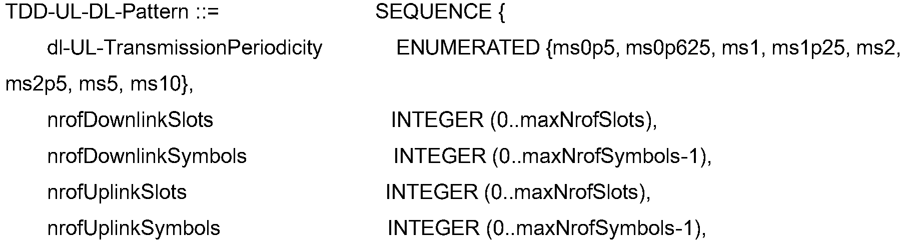

Herein, the parameter dl-UL-TransmissionPeriodicity is used to indicate a size of one cycle defined by the pattern, so that a number of slots in the cycle may be calculated. The number of slots is determined by a configured time size and a subcarrier spacing. For example, ms0p625 indicates 5 slots of a subcarrier spacing of 120 kHz. The parameter nrofDownlinkSlots is used to indicate a number of slots used for a downlink in a cycle. The parameter nrofDownlinkSymbols is used to indicate a number of OFDM symbols used for a downlink in a special slot (S slot). The parameter nrofUplinkSlots is used to indicate a number of slots used for an uplink in a cycle. The parameter nrofUplinkSymbols is used to indicate a number of OFDM symbols used for an uplink in a special slot (S slot). The remaining OFDM symbols are flexible symbols.

The integrated sensing and communication technology may share frequency spectrums, hardware platforms, and even baseband waveforms and signal processing between communication and sensing, thereby improving spectrum efficiency, energy efficiency, and hardware efficiency of a system, and therefore an integration gain may be obtained.

Besides, by mutual assistance and mutual enhancement of the two functions of communication and sensing (for example, communication assists a sensing technology and sensing assists a communication technology, etc.), the performances of the two functions may be improved, and thereby a coordination gain may be obtained.

At present, since standardization on transmission and reception of communication signals and sensing signals in an integrated sensing and communication scenario is not completed, in a wireless communication scenario, some technologies may only enable an access network device to perform transmission and reception of sensing signals. However, performing transmission and reception of sensing signals affects normal transmission of communication data of other devices, which causes excessive loss of communication resources and also limits a sensing capability, resulting in mutual influence between communication and sensing.

In view of this, a sensing communication method is proposed in the present disclosure, which is used to ensure indicators such as service traffic and data transmission accuracy of a communication system while meeting sensing accuracy, timeliness, and accuracy of a sensing system, so that a sensing capability is deeply integrated with a communication capability as an endogenous capability.

In the present disclosure, after determining configuration information of a sensing frame, a first node sends the configuration information of the sensing frame to a second node. In this way, the first node and the second node may perform transmission and reception operations of sensing signals based on a standardized sensing frame configuration, solving the problem of mutual influence between communication signals and sensing signals, thereby realizing deep integration of the sensing capability and the communication capability.

The implementions of the embodiments of the present disclosure will be described in detail below with reference to the accompanying drawings in this specification.

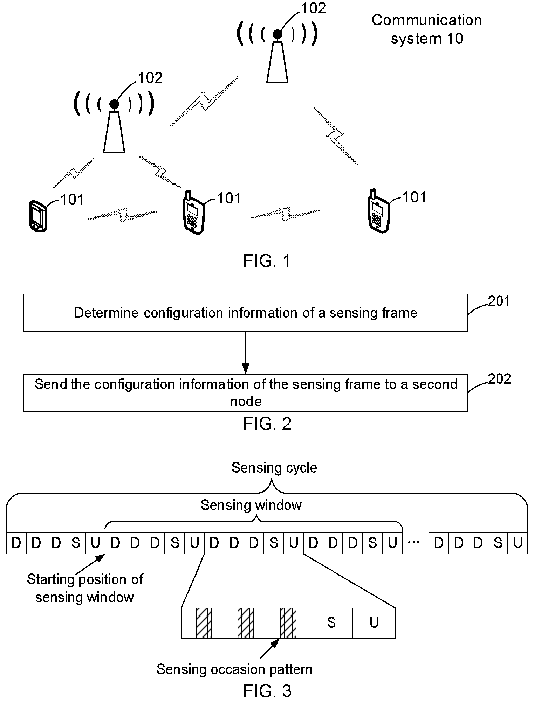

FIG. 1 is a schematic diagram of an architecture of a communication system 10 provided in the embodiments of the present disclosure. As shown in FIG. 1, the communication system 10 includes: a terminal 101 and a base station 102.

The terminal 101 and the base station 102 are connected through a communication link. The terminals 101 are connected to each other through a communication link. The base stations 102 are connected to each other through a communication link. The communication link may transmit and receive communication signals, and may also transmit and receive sensing signals.

For sensing signals, communication nodes in the communication system 10 may perform transmission and reception by themselves, or one communication node may perform transmission to another communication node.

The technical solutions of the embodiments of the present disclosure may be applied to various communication systems 10, such as a code division multiple access (CDMA), a time division multiple access (TDMA), a frequency division multiple access (FDMA), an orthogonal frequency-division multiple access (OFDMA), a single carrier FDMA (SC-FDMA) and other systems. The term "system" may be interchanged with "network". The CDMA system may implement wireless technologies such as universal terrestrial radio access (UTRA) and CDMA2000, etc. UTRA may include wideband CDMA (WCDMA) technology and other CDMA variant technologies. CDMA2000 may cover interim standard (IS) 2000 (IS-2000), IS-95 and IS-856 standards. The TDMA system may implement wireless technologies such as global system for mobile communication (GSM), etc. The OFDMA system may implement wireless technologies such as evolved UTRA (E-UTRA), ultra mobile broadband (UMB), IEEE 802.11 (Wi-Fi), IEEE 802.16 (WiMAX), IEEE 802.20, and Flash OFDMA. UTRA and E-UTRA are versions of UMTS and UMTS evolution. Long term evolution (LTE) and various versions based on LTE evolution for 3GPP are new versions of UMTS using E-UTRA. The communication system 10 may also be a 5G communication system, a new radio (NR), a 5G-A (5.5G) system, and a 6G communication system. In addition, the communication system 10 may also be applicable to future-oriented communication technologies, to which the technical solutions provided in the embodiments of the present disclosure are all applicable.

The terminal 101 is a device with wireless communication functions, which may be deployed on land, including indoors or outdoors, handheld or vehicle-mounted; may further be deployed on the water surface (such as on ships, etc.); may further be deployed in the air (for example, on airplanes, balloons and satellites, etc.). The terminal 101 is also called user equipment (UE), a mobile station (MS), a mobile terminal (MT), terminal device, or the like, and is a device that provides voice and/or data connectivity to a user. For example, the terminal 101 includes a handheld device, a vehicle-mounted device, etc., with a wireless connection function. At present, the terminal 101 may be: a mobile phone, a tablet computer, a notebook computer, a handheld computer, a mobile internet device (MID), a wearable device (such as a smart watch, a smart bracelet, a pedometer, etc.), a vehicle-mounted device (the vehicle may be, for example, a car, a bicycle, an electric train, a plane, a ship, a train, a high-speed railway, etc.), a virtual reality (VR) device, a augmented reality (AR) device, a wireless terminal in industrial control, a smart home device (such as a refrigerator, a television, a air conditioner, a meter, etc.), an intelligent robot, a workshop equipment, a wireless terminal in self driving, a wireless terminal in remote medical surgery, a wireless terminal in a smart grid, a wireless terminal in transportation safety, a wireless terminal in a smart city, or a wireless terminal in a smart home, a flight device (such as a smart robot, a hot air balloon, a drone, an airplane), etc. In an application scenario of the present disclosure, the terminal is a terminal that often operates on the ground, such as a vehicle-mounted device. In the present disclosure, for ease of description, a chip deployed in the above devices, such as a system-on-a-chip (SOC), a baseband chip, or other chips with a communication function may also be referred to as a terminal.

The terminal 101 may be a vehicle with a corresponding communication functions, or a vehicle-mounted communication apparatus, or other embedded communication apparatuses, or may be a user handheld communication device, including a mobile phone, a tablet computer, or the like.

As an example, in the embodiments of the present disclosure, the terminal 101 may also be a wearable device. The wearable device can also be referred to as a wearable smart device, which is a general term for the intelligent design and development of wearable devices for daily wear using wearable technology, such as glasses, gloves, watches, clothing and shoes. The wearable device is a portable device that is worn directly on the body or integrated into the user's clothing or accessories. The wearable devices is not just a hardware device, but also realize powerful functions through the software support, data interaction, and cloud interaction. In a broad sense, functions included in the wearable smart device are comprehensive, and the wearable smart device has a large size, and can achieve complete or partial functions without relying on smartphone (such as a smart watch or smart glasses), and the wearable smart device (such as various smart bracelets and smart jewelry for vital sign monitoring) only focuses on a certain type of application functions and need to be used in conjunction with other devices such as smartphones.

The base station 102 is a device located on an access network side of the above communication system and having a wireless transceiver function, or a chip or chip system that may be arranged in the device. The base station 102 includes, but is not limited to: an access point (AP) in a WiFi system, such as a home gateway, a router, a server, a switch, a bridge, etc., an evolved NodeB (eNB), a radio network controller (RNC), a NodeB (NB), a base station controller (BSC), a base transceiver station (BTS), a home base station (e.g., home evolved NodeB, or home NodeB (HNB)), a base band unit (BBU), a wireless relay node, a wireless backhaul node, a transmission point (TP) (or referred to as a transmission and reception point (TRP)), etc., and may also be a 5G base station, such as a gNB in a new radio (NR) system, or a transmission point (e.g., TRP or TP), one or a group of (including multiple antenna panels) antenna panels of a base station in a 5G system, or may also be a network node that constitutes a gNB or a transmission point, such as a base band unit (BBU), or a distributed unit (DU), a road side unit (RSU) with a base station function, or a 5G access network (e.g., a NG radio access network (NG-RAN)) device, etc. The base station 102 also includes base stations in different networking modes, such as a master base station (e.g., master evolved NodeB (MeNB)), a secondary base station (e.g., a secondary eNB (SeNB) or secondary gNB (SgNB)). The base station 102 also includes different types, for example, a ground base station, an aerial base station, a satellite base station, or the like.

The technical solutions provided in the present disclosure is applied to an integrated sensing and communication scenario in the communication system 10. Herein, with regard to transmission and reception of communication resources, a current communication transmission manner may be followed, and the present disclosure does not limit this.

With regard to transmission and reception of sensing resources, the following scenarios are mainly included: the base station 102 performs transmission by itself and performs reception by itself; a base station 102 performs transmission to another base station 102; the base station 102 performs transmission and the terminal 101 performs reception; the terminal 101 performs transmission by itself and performs reception by itself; a terminal 101 performs transmission to another terminal 101; and the terminal 101 performs transmission and the base station 102 performs reception.

In the three types of scenarios of the base station 102 performing transmission by itself and performing reception by itself, a base station 102 performing transmission to another base station 102, and the base station 102 performing transmission and the terminal 101 performing reception, the base station 102 needs to transmit a sensing signal through a downlink slot or a downlink OFDM symbol.

In the three types of scenarios of the terminal 101 performing transmission by itself and performing reception by itself, a terminal 101 performing transmission to another terminal 101, and the terminal 101 performing transmission and the base station 102 performing reception, the terminal 101 needs to transmit a sensing signal through an uplink slot or an uplink OFDM symbol.

Exemplarily, in the present disclosure, the base station 102 may configure configuration information of sensing frames of the base station 102 and the terminal 101, so that the base station 102 and the terminal 101 transmit sensing signals according to the configuration information of the sensing frames, to realize deep integration of a sensing capability and a communication capability, and avoid mutual influence between communication and sensing.

In some embodiments, in a case where there are a collision and a contention between a sensing resource and a communication resource, the base station 102 and the terminal 101 may perform a collision avoidance strategy to reduce the impact caused by the collision.

It should be pointed out that, the embodiments of the present disclosure may learn from or refer to each other, for example, same or similar steps, method embodiments, system embodiments and device embodiments may refer to each other, which may not be limited herein.

FIG. 2 is a flowchart of a sensing communication method provided in the embodiments of the present disclosure, and the sensing communication method is applied to a first node. As shown in FIG. 2, the method includes 201-202.

In 201, configuration information of a sensing frame is determined.

The configuration information of the sensing frame is used to configure a time-domain resource used for carrying a sensing signal. The first node may be a base station in the communication system.

Exemplarily, the configuration information of the sensing frame is used to configure at least one of: a size of a sensing window, a sensing cycle, a starting position of the sensing window, a sensing signal transmission manner, and a sensing occasion pattern.

The sensing window is used to indicate a range where the sensing occasion pattern is capable of being configured within a sensing cycle. The sensing window is located within a sensing cycle, and the size of the sensing window is an integer multiple of a size of an uplink-downlink configuration pattern cycle. The size of the uplink-downlink configuration pattern cycle consist of a plurality of slots (for example, in a case where a subcarrier spacing is 120 kHz, a size of the uplink-downlink configuration pattern cycle is 5 slots).

The sensing cycle is used to define a size of a time-domain resource occupied by a sensing frame. The starting position of the sensing window is used to define a starting position of the sensing window within the sensing cycle. The sensing signal transmission manner is used to define whether a sensing signal is used for an uplink or a downlink.

The sensing occasion pattern is used to indicate a time-domain position of a sensing occasion within the sensing window. That is, the time-domain position indicated by the sensing occasion pattern is capable of being used to send a sensing signal. Shaded parts indicate time-domain positions used to send a sensing signal.

As shown in FIG. 3, a size of a uplink-downlink configuration pattern cycle is 5 slots, each slot includes 14 OFDM symbols, D indicates a downlink slot, U indicates an uplink slot, and S indicates a special slot. A sensing cycle includes a plurality of slots, where a starting position of the sensing window is a first OFDM symbol in a sixth slot in the sensing cycle, and an end position is a fourteenth OFDM symbol in a twentieth slot, totally occupying 15 slots, i.e., three uplink-downlink configuration pattern cycles. The sensing occasion pattern is used to configure a time-domain resource for a sensing signal within the sensing window, and a size of the sensing occasion pattern is a uplink-downlink configuration pattern cycle, corresponding to any uplink-downlink configuration pattern cycle within the sensing window. That is, time-domain resources for sensing signals on the three uplink-downlink configuration pattern cycles within the sensing window are all configured according to the sensing occasion pattern. As shown in FIG. 3, the shaded parts in the sensing occasion pattern is the time-domain resource used to send a sensing signal.

Exemplarily, the following is a kind of configuration information of a sensing frame provided in the embodiments of the present disclosure:

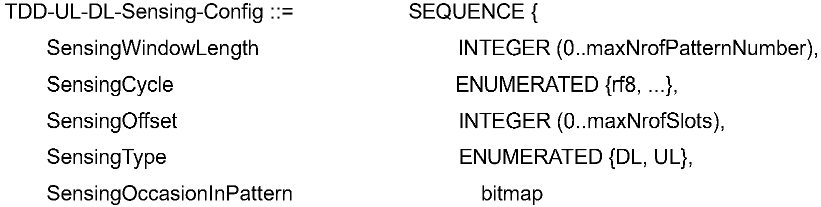

The parameter SensingWindowLength indicates the size of the sensing window, a configuration unit of which may be the number of uplink-downlink configuration pattern cycles used for communication. For example, in a case where a parameter value of the parameter SensingWindowLength is 3, it indicates that the size of the sensing window is the size of three uplink-downlink configuration pattern cycles defined in the configuration information of the communication frame.

The parameter SensingCycle indicates a sensing cycle, i.e., a size of a cyclic cycle of a sensing frame. A configuration unit of the sensing cycle may be 10 ms, i.e., a size of one communication frame.

The combination of the size of the sensing window and the sensing cycle may be used to standardize a proportion of the sensing frame occupying an overall frame structure.

The parameter SensingOffset indicates the starting position of the sensing window. A configuration unit may be a number of uplink-downlink configuration pattern cycles. Exemplarily, in a case where a parameter value of the parameter SensingOffset is 1, the starting position of the sensing window is after a first uplink-downlink configuration pattern cycle, i.e., a starting position of a second uplink-downlink configuration pattern cycle.

By setting the starting position of the sensing window, the sensing frame may avoid communication resources that cannot be multiplexed and have a higher priority, thereby avoiding affecting normal operations of communication services.

The parameter SensingType indicates a sensing signal transmission manner, for example, the sensing signal transmission manner includes a downlink and an uplink. The downlink corresponds to sensing resources in the three types of scenarios that: a base station performs transmission by itself and performs reception by itself; one base station performs transmission to another base station; and a base station performs transmission and a terminal performs reception. The uplink corresponds to sensing resources in the three types of scenarios that: a terminal performs transmission by itself and performs reception by itself; one terminal performs transmission to another terminal; and a terminal performs transmission and a base station performs reception.

The parameter SensingOccasionInPattern indicates a sensing occasion pattern. Exemplarily, the sensing occasion pattern may indicate, in a form of a bitmap, a time-domain position used to transmit a sensing signal in one uplink-downlink configuration pattern cycle within the sensing window.

In a case where the sensing signal transmission manner is a downlink, the sensing occasion pattern may configure downlink slots and downlink OFDM symbols in a uplink-downlink configuration pattern cycle within the sensing window; in a case where the sensing signal transmission manner is an uplink, the sensing occasion pattern may configure uplink slots and uplink OFDM symbols in an uplink-downlink configuration pattern cycle within the sensing window.

The following is an example of a sensing occasion pattern:
SensingOccasionInPattern: [
00001111110000,
00001111110000,
00001111110000,
00000000000000,
00000000000000,
]

The sensing occasion pattern includes 5 slots in one uplink-downlink configuration pattern cycle, each slot includes 14 OFDM symbols, respectively corresponding to 0 or 1 in the above example. 0 indicates that a corresponding OFDM symbol is not used for transmission of a sensing signal. 1 indicates that a corresponding OFDM symbol may be used for transmission of a sensing signal.

In some embodiments, the first node may acquire configuration information of a communication frame and a sensing service requirement, and determine the configuration information of the sensing frame based on the configuration information of the communication frame and the sensing service requirement.

The configuration information of the communication frame may refer to current relevant communication protocols, which is not limited in the present disclosure. The sensing service requirement may include a sensing time-domain interval, a sensing bandwidth, or the like. For example, parameters such as the size of the sensing window and the sensing cycle in the configuration information may be determined according to a density degree of a sensing signal defined by the sensing service requirement.

In some embodiments, the first node may determine the configuration information of the sensing frame according to a transmission resource for a target communication signal.

The target communication signal may be a synchronization signal, a random access signal, or a control signal. In this way, the first node may set a time-domain position of the sensing signal to a position other than a time-domain position where the target communication signal is located, thereby avoiding resource overlap with a relatively key communication signal.

Exemplarily, a configuration cycle for a synchronization signal/physical broadcast channel (SS/PBCH) block (SSB) in communication is 20 ms, which is located in a first half frame, i.e., in the first 5 ms. A physical downlink control channel (PDCCH) is located on a first OFDM symbol in a slot.

For example, the configuration information of the sensing frame is as follows:
SensingWindowLength: 24
SensingCycle: 20ms
SensingOffset: 8
SensingType: DL
SensingOccasionInPattern: [
00000000001111,
00000000001111,
00000000001111,
00000000000000,
00000000000000,
]

"SensingWindowLength: 24" indicates that the size of the sensing window is 24 uplink-downlink configuration pattern cycles, i.e., 120 slots. "SensingCycle: 20ms" indicates that the sensing cycle is 20 ms, meaning it cycles once every 20ms. "SensingOffset:8" indicates that the starting position of the sensing window is a first OFDM symbol in a ninth uplink-downlink configuration pattern cycle within the sensing cycle. "SensingType: DL" indicates that a sensing signal is used for a downlink. Pattern data in SensingOccasionInPattern indicates that in any uplink-downlink configuration pattern cycle within the sensing window, the eleventh to fourteenth OFDM symbols in the first to third slots are time-domain positions used to send a sensing signal.

In 202, the configuration information of the sensing frame is sent to a second node.

The second node may be a terminal, and may also be a base station.

Exemplarily, for the six types of scenarios that: a base station performs transmission by itself and performs reception by itself; one base station performs transmission to another base station; a base station performs transmission and a terminal performs reception; a terminal performs transmission by itself and performs reception by itself; one terminal performs transmission to another terminal; and a terminal performs transmission and a base station performs reception, the first node needs to send the configuration information of the sensing frame to involved communication nodes such as a terminal and a base station, so that corresponding devices are capable of identifying a configuration range of the sensing frame, facilitate performing transmission and reception operations of the sensing signal, or perform an avoidance operation on the sensing signal, thereby avoiding affecting communication services.

In a case where the second node is a base station, the first node may send the configuration information of the sensing frame to the second node via an Xn interface.

In a case where the second node is a terminal, the first node may send the configuration information of the sensing frame in a current communication manner.

Based on the above technical solutions, in the present disclosure, after determining the configuration information of the sensing frame, the first node sends the configuration information of the sensing frame to the second node. In this way, the first node and the second node may perform transmission and reception operations of sensing signals based on a standardized sensing frame configuration, solving the problem of mutual influence between communication signals and sensing signals, thereby realizing deep integration of the sensing capability and the communication capability.

After configuring the configuration information of the sensing frame, the first node may also configure a time-domain position of the sensing frame in real time in a dynamic or semi-static triggering manner.

The following introduces a sensing resource configuration process in which the first node performs dynamic or semi-static triggering.

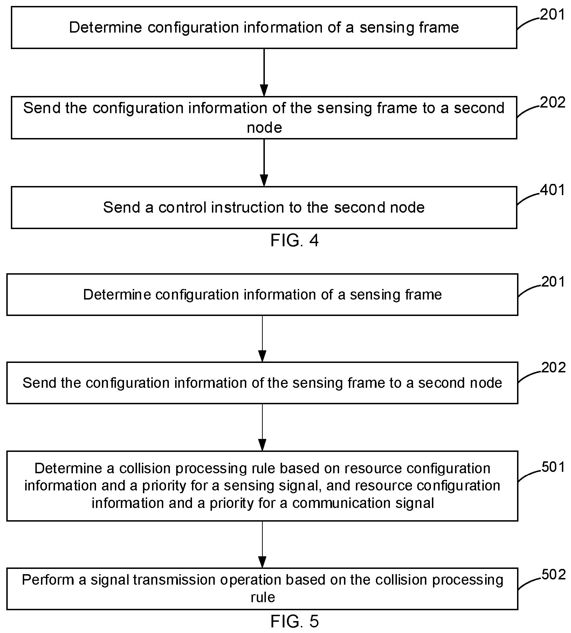

In some embodiments, with reference to FIG. 2, as shown in FIG. 4, the method further includes 401.

In 401, a control instruction is sent to the second node.

The control instruction is used to activate or deactivate a sensing resource. The control instruction may be downlink control information (DCI) or a media access control-control element (MAC CE).

In some embodiments, the first node may determine the control instruction according to a current sensing target.

The sensing target includes, but is not limited to, a sensing range size, a sensing accuracy requirement, a sensing sensitivity requirement, or the like.

Exemplarily, the first node may be a base station, and the second node may be a base station or a terminal.

For sensing scenarios of a base station performing transmission by itself and performing reception by itself, one base station performing transmission to another base station, and a base station performing transmission and a terminal performing reception, the base station needs to send a control instruction to a terminal in a cell where the base station is located and a base station that receives the sensing signal, so that corresponding devices perform transmission and reception operations of the sensing signal, or perform an avoidance operation on the sensing signal, thereby avoiding affecting communication services.

For sensing scenarios of a terminal performing transmission by itself and performing reception by itself, one terminal performing transmission to another terminal, and a terminal performing transmission and a base station performing reception, the base station needs to send a control instruction to a terminal in the cell where the base station is located, so that the terminal performs transmission and reception operations of the sensing signal, or perform an avoidance operation on the sensing signal, thereby avoiding affecting communication services.

In some embodiments, the control instruction includes a first bitmap, the first bitmap includes a plurality of indication bits, each indication bit corresponds to a symbol in a slot, and the each indication bit is used to indicate whether there is a sensing signal in the symbol corresponding to the indication bit.

Exemplarily, the control instruction may be DCI scrambled by a cell temporary user identifier (i.e., cell-radio network temporary identifier (C-RNTI)).

The control instruction is used for sensing scenarios of a base station performing transmission and a terminal performing reception, and a terminal performing transmission and a base station performing reception. The first node may dynamically trigger a sensing resource through a DCI 1-0/1-1/0-0/0-1 format scrambled by a C-RNTI.

The DCI includes a sensing identifier field, which is used to indicate the first bitmap. A size of the field is the number of OFDM symbols included in one slot. Taking one slot including 14 OFDM symbols as an example, each bit in the first bitmap corresponds to one OFDM symbol in the slot, respectively.

In a case where a value of one bit of the first bitmap is 1, it indicates that there is a sensing signal actually in the OFDM symbol corresponding to this bit; in a case where a value of one bit of the first bitmap is 0, it indicates that there is no sensing signal actually in the OFDM symbol corresponding to this bit.

In some embodiments, the control instruction includes at least one of: a second bitmap, first indication information, and second indication information.

The second bitmap includes a plurality of indication bits, each indication bit corresponds to a sensing occasion within the sensing window, and each indication bit is used to indicate whether there is a sensing signal in the sensing occasion corresponding to the indication bit. The first indication information is used to indicate whether to perform sensing on a sensing occasion where there is a sensing signal. The second indication information is used to indicate whether to perform a sleep strategy of discontinuous reception (DRX) during a sensing process.

Exemplarily, the control instruction is DCI scrambled by a temporary user identifier used for sensing (i.e., a sensing-radio network temporary identifier (S-RNTI)).

The control instruction is used for sensing scenarios of a base station performing transmission by itself and performing reception by itself; one base station performing transmission to another base station; a terminal performing transmission by itself and performing reception by itself; and one terminal performing transmission to another terminal.

The DCI may include fields such as a sensing identifier, a sensing active identifier, and a DRX sleep identifier, etc.

The sensing identifier field is used to indicate the second bitmap. A size of the field is the number of time-domain positions configured as sensing occasions in the sensing occasion pattern.

For example, if 8 OFDM symbols are configured as time-domain positions of sensing occasions in the sensing occasion pattern, the size of the sensing identifier field is 8 bits. Each bit in the second bitmap corresponds to a time-domain position configured as a sensing occasion in the sensing occasion pattern, respectively.

In a case where a value of one bit in the second bitmap is 1, it indicates that there is a sensing signal actually in the time-domain position of the sensing occasion corresponding to this bit; in a case where a value of one bit in the second bitmap is 0, it indicates that there is no sensing signal actually in the time-domain position of the sensing occasion corresponding to this bit.

The sensing active identifier field is used to indicate the first indication information. In a case where a value of the first indication information is 1, it indicates to activate sensing, and the second node may perform sensing at a time-domain position indicated in the second bitmap until a value of the first indication information in a received control instruction is 0; in a case where a value of the first indication information is 0, it indicates to deactivate sensing. In this way, the first node may perform semi-static triggering of the sensing resource through the DCI.

The DRX sleep identifier field is used to indicate the second indication information. Because in a case where sensing is performed in this scenario, a terminal cannot perform a communication service. Therefore, the first node may indicate, through this field, the terminal to perform a DRX sleep strategy during the sensing process to save resources.

In some embodiments, in a case where the control instruction only includes the second bitmap, the control instruction may be a MAC CE.

At this time, the MAC CE includes an x-bit string used to indicate the second bitmap, x is the number of time-domain positions configured as sensing occasions in the sensing occasion pattern. The second node identifies the function of the control instruction by analyzing MAC CE header information.

The control instruction is used for sensing scenarios of a base station performing transmission and a terminal performing reception, and a terminal performing transmission and a base station performing reception. The first node may perform semi-static triggering of the sensing resource through the MAC CE.

Based on the above technical solutions, in the present disclosure, after sending the configuration information of the sensing frame to the second node, the first node may also realize real-time adjustment of the time-domain position of the sensing frame in a dynamic or semi-static manner by sending a control instruction, thereby realizing flexible configuration of a sensing frame structure, and improving a utilization rate of time-frequency resources under the integrated sensing and communication.

In an integrated sensing and communication scenario, the communication frame structure and the sensing frame structure overlap in a time domain, which may cause a transmission resource contention between a sensing signal and a communication signal. In the present disclosure, the first node or the second node may perform a signal transmission operation based on a collision processing rule to avoid signal contention.

The following introduces a process in which the first node performs the signal transmission operation based on the collision processing rule.

In some embodiments, with reference to FIG. 2, as shown in FIG. 5, the method further includes 501 and 502.

In 501, a collision processing rule is determined based on resource configuration information and a priority for a sensing signal, and resource configuration information and a priority for a communication signal.

The resource configuration information includes at least one of: a time-domain resource, a frequency-domain resource, and a beam resource.

It should be noted that the resource configuration information is used to define configuration parameters related to signal transmission. Taking a 5G NR communication system as an example, the resource configuration information includes configuration parameters in three dimensions of time-domain resource, frequency-domain resource, and beam resource. The technical solutions proposed in the present disclosure are also applicable to resource configuration information including configuration parameters in other dimensions.

The first node may determine, based on the resource configuration information, whether the sensing signal and the communication signal are capable of being multiplexed.

In combination with the above example, the resource configuration information includes three dimensions: time-domain resource, frequency-domain resource, and beam resource. In a case where the configuration information of the sensing signal and the communication signal in the time domain, the frequency domain, and the beam dimension are consistent, the sensing signal and the communication signal are capable of being multiplexed. In a case where the configuration information of the sensing signal and the communication signal in the time domain, the frequency domain, and the beam dimension are not consistent, the sensing signal and the communication signal cannot be multiplexed.

A priority is used to characterize a degree of importance of a signal. In a case where the sensing signal and the communication signal cannot be multiplexed, the first node may give a priority to a signal with a higher priority to avoid a contention between the sensing signal and the communication signal.

In 502, a signal transmission operation is performed based on the collision processing rule.

Exemplarily, the collision processing rule includes signal multiplexing and signal avoidance.

In a case where the sensing signal and the communication signal are capable of being multiplexed, the first node uses the communication signal as the sensing signal, that is, the transmitted signal may simultaneously realize the functions of the communication signal and the sensing signal.

In this way, the first node may simultaneously meet a communication requirement and a sensing requirement in a resource multiplexing manner, avoiding a resource contention between communication and sensing, and further improving a utilization rate of time-frequency resources.

In a case where the sensing signal and the communication signal cannot be multiplexed, the first node perform signal avoidance to avoid a contention between the sensing signal and the communication signal.

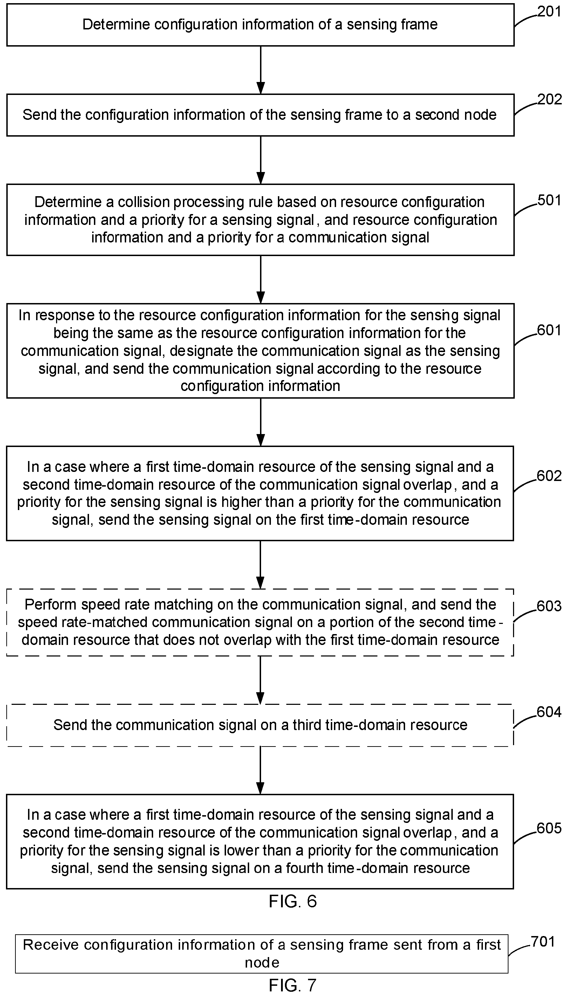

In some embodiments, with reference to FIG. 5, as shown in FIG. 6, in a case where the sensing signal and the communication signal are capable of being multiplexed, the above 502 may be implemented through 601.

In 601, in response to the resource configuration information for the sensing signal being the same as the resource configuration information for the communication signal, the communication signal is designated as the sensing signal, and the communication signal is sent according to the resource configuration information.

In a case where the resource configuration information for the sensing signal is the same as the communication signal, it indicates that the sensing signal and the communication signal are capable of being multiplexed, and the first node may use the communication signal as the sensing signal, and send the communication signal according to the resource configuration information. In a case where the resource configuration information of the sensing signal and the communication signal is not completely the same, it indicates that the sensing signal and the communication signal cannot be multiplexed. At this time, the first node needs to perform signal avoidance to avoid a contention between the sensing signal and the communication signal.

The following introduces a process in which the first node perform the signal avoidance.

In some embodiments, with reference to FIG. 5, as shown in FIG. 6, in a case where the resource configuration information at least includes a time-domain resource, the method further includes 602.

In 602, in a case where a first time-domain resource of the sensing signal and a second time-domain resource of the communication signal overlap, and a priority for the sensing signal is higher than a priority for the communication signal, the sensing signal is sent on the first time-domain resource.

The first time-domain resource includes at least one sensing occasion within the sensing window configured according to the configuration information of the sensing frame.

It should be noted that the overlap of the first time-domain resource and the second time-domain resource means that the sensing signal and the communication signal completely or partially overlap in a time-frequency domain. For example, situations for the overlap include that: the first time-domain resource and the second time-domain resource overlap, and there is no overlap in the frequency domain; the first time-domain resource and the second time-domain resource overlap, and there is partial overlap in the frequency domain; and the first time-domain resource and the second time-domain resource overlap both in the time domain and the frequency domain.

In an example, the first node may determine a priority order of the sensing signal and the communication signal according to signal types.

In some embodiments, in a case where the type of the communication signal is a synchronization signal, a random access signal, or a control signal, the priority for the communication signal is higher than the priority for the sensing signal. In a case where the type of the communication signal is a reference signal or a data signal, the priority for the sensing signal is higher than the priority for the communication signal. The data signal is a communication signal used to transmit data.

For example, the synchronization signal may be a signal on an SSB, and the random access signal may be a signal on a physical random access channel (PRACH). The control signal may be a signal on a PDCCH or a physical uplink control channel (PUCCH).

The reference signal may be a demodulation reference signal (DMRS), a channel state information reference signal (CSI-RS), a positioning reference signal (PRS), a phase tracking reference signal (PTRS), a sounding reference signal (SRS), or the like.

In another example, the first node may determine an priority order of the sensing signal and the communication signal according to channels where the signals are located.

In some embodiments, in a case where the communication signal is carried on a synchronization signal/physical broadcast channel block, or a physical random access channel, or a control channel, the priority for the communication signal is higher than the priority for the sensing signal. In a case where the communication signal is carried on a shared channel, the priority for the sensing signal is higher than the priority for the communication signal.

For example, the control channel may be a PUCCH or a PDCCH, and the shared channel may be a physical uplink shared channel (PUSCH) or a physical downlink shared channel (PDSCH).

In a case where the priority for the sensing signal is higher, and the priority for the communication signal is lower, the first node may give priority to ensuring normal transmission and reception of the sensing signal to avoid affecting signal sensing, while having a small influence on the communication system.

In some embodiments, with reference to FIG. 5, as shown in FIG. 6, after 602, the method further includes 603.

In 603, speed rate matching is performed on the communication signal, and the speed rate-matched communication signal is sent on a portion of the second time-domain resource that does not overlap with the first time-domain resource.

Exemplarily, the communication signal may be a communication signal used to transmit data. Speed rate matching refers to converting a data stream into a bit rate suitable for current channel transmission by coding, modulating, symbol mapping, or the like, to balance channel reliability and a data transmission rate.

The first node may perform speed rate matching on the communication signal based on the portion of the second time-domain resource that does not overlap with the first time-domain resource, so that the communication signal is sent on the portion of resource that does not overlap with the first time-domain resource. In this way, the first node may not only send the sensing signal on the first time-domain resource, but also send the speed rate-matched communication signal on the portion of the second time-domain resource that does not overlap with the first time-domain resource, thereby realizing normal transmission of the communication signal, and avoiding affecting the communication system.

In some embodiments, with reference to FIG. 5, as shown in FIG. 6, after 602, the method further includes 604.

In 604, the communication signal is sent on a third time-domain resource.

The third time-domain resource is an available time-domain resource that is adjacent to the second time-domain resource and does not overlap with the first time-domain resource.

Exemplarily, the communication signal may be a reference signal. The first node may detect, before and after a time-domain position of the second time-domain resource, whether there is an available position. For example, the first node may determine whether a previous one OFDM symbol is capable of being used to send the communication signal, and if it is capable of being used to send the communication signal, the OFDM symbol is taken as the third time-domain resource. If not, whether other adjacent positions are available may be detect continuously.

In a case where OFDM symbols adjacent to the time-domain position of the second time-domain resource are all unavailable, the first node does not send the communication signal.

A condition for being adjacent to the time-domain position of the second time-domain resource (for example, an interval less than n OFDM symbols) may be defined in the present disclosure according to actual situations, n is a positive integer.

In some embodiments, with reference to FIG. 5, as shown in FIG. 6, in a case where the resource configuration information at least includes a time-domain resource, the method further includes 605.

In a case where a first time-domain resource for the sensing signal and a second time-domain resource for the communication signal overlap, and the priority for the sensing signal is lower than the priority for the communication signal, the sensing signal is sent on a fourth time-domain resource; where the fourth time-domain resource is an available time-domain resource that is adjacent to the first time-domain resource and does not overlap with the second time-domain resource.

In 605, in a case where a first time-domain resource of the sensing signal and a second time-domain resource of the communication signal overlap, and a priority for the sensing signal is lower than a priority for the communication signal, the sensing signal is sent on a fourth time-domain resource.

The fourth time-domain resource is an available time-domain resource that is adjacent to the first time-domain resource and does not overlap with the second time-domain resource.

In a case where the priority for the sensing signal is lower, and the priority for the communication signal is higher, for example, the communication signal may be a synchronization signal, a random access signal, or a control signal, the first node may give priority to ensuring normal transmission and reception of the communication signal to avoid affecting the communication system. That is, the first node may send the communication signal on the second time-domain resource.

Exemplarily, the first node may detect, before and after a time-domain position of the first time-domain resource, whether there is an available position. For example, the first node may determine whether a previous one OFDM symbol is capable of being used to send the sensing signal, and if it is capable of being used to send the sensing signal, the OFDM symbol is taken as the fourth time-domain resource. If not, whether other adjacent positions are available may be detect continuously.

In a case where OFDM symbols adjacent to the time-domain position of the first time-domain resource are all unavailable, the first node does not send the sensing signal.

A condition for being adjacent to the time-domain position of the first time-domain resource (for example, an interval less than n OFDM symbols) may be defined in the present disclosure according to actual situations, n is a positive integer.

Based on the above technical solutions, in a case where the priority for the sensing signal is lower than the priority for the communication signal, the first node may select an available time-domain resource that is adjacent to the first time-domain resource and does not overlap with the second time-domain resource to send the sensing signal, thereby reducing an impact on signal sensing, while avoiding affecting normal transmission of the communication signal.

FIG. 7 is a flowchart of a sensing communication method provided in the embodiments of the present disclosure, and the sensing communication method is applied to a second node. As shown in FIG. 7, the method includes 701.

701, configuration information of a sensing frame sent from a first node is received.

Exemplarily, the configuration information of the sensing frame is used to configure at least one of: a size of a sensing window, a sensing cycle, a starting position of the sensing window, a sensing signal transmission manner, and a sensing occasion pattern. The sensing occasion pattern is used to indicate a time-domain position of a sensing occasion within the sensing window.

Exemplarily, the second node may analyze the configuration information of the sensing frame.

Related description may refer to the description in the above 201-202, and details are not repeated herein.

Based on the above technical solutions, in the present disclosure, the second node may receive the configuration information of the sensing frame from the first node. In this way, the first node and the second node may perform transmission and reception operations of the sensing signal based on a standardized sensing frame configuration, solving the problem of mutual influence between communication signals and sensing signals, thereby realizing deep integration of the sensing capability and the communication capability.

The following introduces a process in which the second node receives a control instruction.

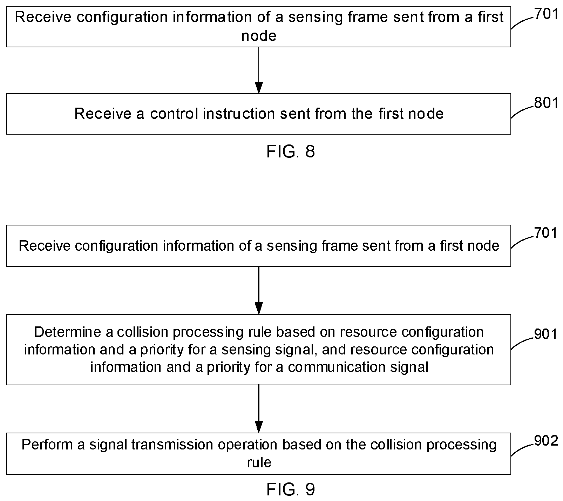

In some embodiments, with reference to FIG. 7, as shown in FIG. 8, the method further includes 801.

In 801, a control instruction sent from the first node is received.

The control instruction is used to activate or deactivate a sensing resource. The control instruction is downlink control information (DCI) or a media access control-control element (MAC CE).

In some embodiments, the control instruction includes a first bitmap, the first bitmap includes a plurality of indication bits, each indication bit corresponds to a symbol in a slot, and the each indication bit is used to indicate whether there is a sensing signal in the symbol corresponding to the indication bit.

Exemplarily, the control instruction may be DCI scrambled by a cell temporary user identifier (i.e., cell-radio network temporary identifier (C-RNTI)).

In some embodiments, the control instruction includes at least one of: a second bitmap, first indication information, and second indication information.

The second bitmap includes a plurality of indication bits, each indication bit corresponds to a sensing occasion within the sensing window, and each indication bit is used to indicate whether there is a sensing signal in the sensing occasion corresponding to the indication bit. The first indication information is used to indicate whether to perform sensing on a sensing occasion where there is a sensing signal. The second indication information is used to indicate whether to perform a sleep strategy of discontinuous reception (DRX) during a sensing process.

Exemplarily, the control instruction is DCI scrambled by a temporary user identifier used for sensing (i.e., a sensing-radio network temporary identifier (S-RNTI)).

In some embodiments, in a case where the control instruction only includes the second bitmap, the control instruction may be a MAC CE.

Related description may refer to the description in the above 401, and details are not repeated herein.

The following introduces a process in which the second node performs the signal transmission operation based on the collision processing rule.

In one embodiment, with reference to FIG. 7, as shown in FIG. 9, the method further includes 901 and 902.

In 901, a collision processing rule is determined based on resource configuration information and a priority for a sensing signal, and resource configuration information and a priority for a communication signal.

The resource configuration information includes at least one of: a time-domain resource, a frequency-domain resource, and a beam resource.

Related description may refer to the description in the above 501, and details are not repeated herein.

In 902, a signal transmission operation is performed based on the collision processing rule.

Exemplarily, the collision processing rule includes signal multiplexing and signal avoidance.

Related description may refer to the description in the above 502, and details are not repeated herein.

It should be noted that the above 502 is used for a scenario where the first node sends a signal, for example, three types of sensing scenarios: a base station performing transmission by itself and performing reception by itself; one base station performing transmission to another base station; and a base station performing transmission and a terminal performing reception.

While the above 902 is used for a scenario where the second node sends a signal. For example, three types of sensing scenarios: a terminal performing transmission by itself and performing reception by itself; one terminal performing transmission to another terminal; and a terminal performing transmission and a base station performing reception.

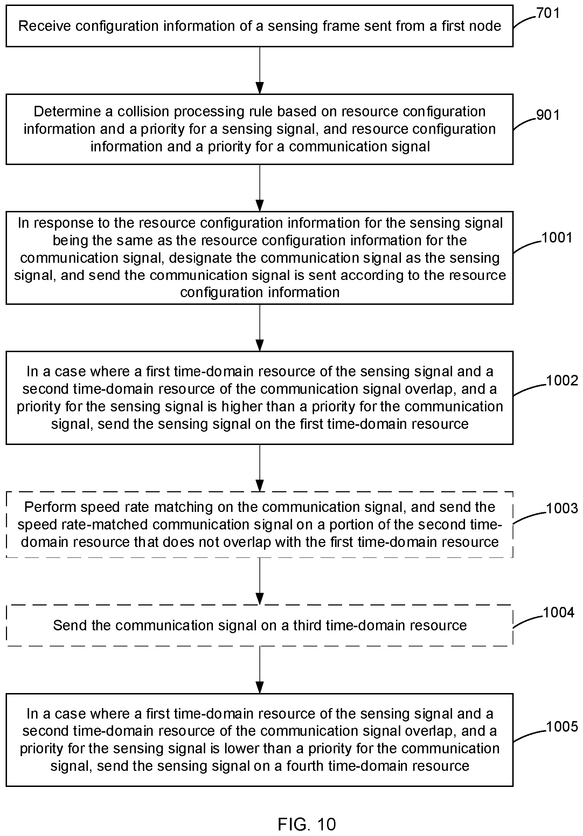

In some embodiments, with reference to FIG. 9, as shown in FIG. 10, in a case where the sensing signal and the communication signal are capable of being multiplexed, the above 902 may be implemented through 1001.

In 1001, in response to the resource configuration information for the sensing signal being the same as the resource configuration information for the communication signal, the communication signal is designated as the sensing signal, and the communication signal is sent according to the resource configuration information.

Related description may refer to the description in the above 601, and details are not repeated herein.

The following introduces a process in which the second node perform the signal avoidance.

In some embodiments, with reference to FIG. 9, as shown in FIG. 10, in a case where the resource configuration information at least includes a time-domain resource, the method further includes 1002.

In 1002, in a case where a first time-domain resource of the sensing signal and a second time-domain resource of the communication signal overlap, and a priority for the sensing signal is higher than a priority for the communication signal, the sensing signal is sent on the first time-domain resource.

The first time-domain resource includes at least one sensing occasion within the sensing window configured according to the configuration information of the sensing frame.

Related description may refer to the description in the above 602, and details are not repeated herein.

In some embodiments, with reference to FIG. 9, as shown in FIG. 10, after 1002, the method further includes 1003.

In 1003, speed rate matching is performed on the communication signal, and the speed rate-matched communication signal is sent on a portion of the second time-domain resource that does not overlap with the first time-domain resource.

Related description may refer to the description in the above 603, and details are not repeated herein.

In some embodiments, with reference to FIG. 9, as shown in FIG. 10, after 1002, the method further includes 1004.

In 1004, the communication signal is sent on a third time-domain resource.

The third time-domain resource is an available time-domain resource that is adjacent to the second time-domain resource and does not overlap with the first time-domain resource.

Related description may refer to the description in the above 604, and details are not repeated herein.

In some embodiments, with reference to FIG. 9, as shown in FIG. 10, in a case where the resource configuration information at least includes a time-domain resource, the method further includes 1005.

In 1005, in a case where a first time-domain resource of the sensing signal and a second time-domain resource of the communication signal overlap, and a priority for the sensing signal is lower than a priority for the communication signal, the sensing signal is sent on a fourth time-domain resource.

The fourth time-domain resource is an available time-domain resource that is adjacent to the first time-domain resource and does not overlap with the second time-domain resource.

Related description may refer to the description in the above 605, and details are not repeated herein.

The following describes the sensing communication method provided in the embodiments of the present disclosure in combination with actual scenarios.
(1) A base station performs transmission by itself and performs reception by itself.

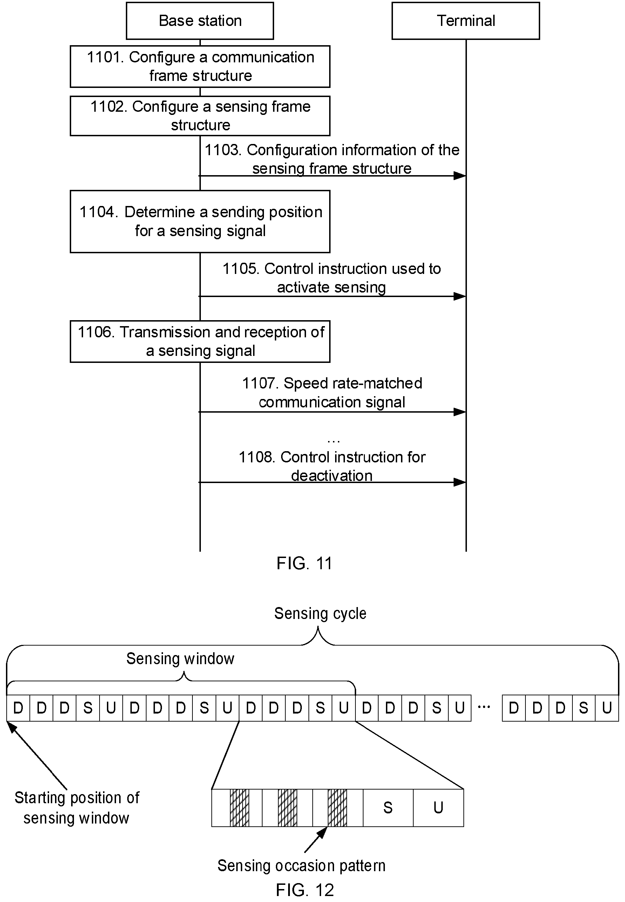

Exemplarily, as shown in FIG. 11, the first node may be a base station, the second node may be a terminal under coverage of a cell of the base station, and the scheme includes 1101-1108.

In 1101, a base station configures a communication frame structure.

The communication frame structure may be configured through some technologies, which is not limited in the present disclosure. For example, a current frame structure used for communication is DDDSU, and specific parameters are as follows:
dl-UL-TransmissionPeriodicity: ms0p625 (which indicates 5 slots of a subcarrier spacing of 120 kHz);
nrofDownlinkSlots: 3
nrofDownlinkSymbols: 10
nrofUplinkSlots: 1
nrofUplinkSymbols: 2

Herein, "nrofDownlinkSlots: 3" indicates that 3 slots among the 5 slots are used for a downlink. "nrofDownlinkSymbols: 10" indicates that 10 OFDM symbols in a special slot are used for the downlink. "nrofUplinkSlots: 1" indicates that 1 slot among the 5 slots is used for an uplink. "nrofUplinkSymbols: 2" indicates that 2 OFDM symbols in the special slot are used for the uplink.

In 1102, the base station configures a sensing frame structure.

Exemplarily, with reference to FIG. 12, the configuration information of the sensing frame structure determined by the base station is as follows:
SensingWindowLength: 3
SensingCycle: 10ms
SensingOffset: 0
SensingType: DL
SensingOccasionInPattern: [
   00001111110000,
   00001111110000,
   00001111110000,
   00000000000000,
   00000000000000,
   ]

Herein, "SensingWindowLength: 3" indicates that the size of the sensing window is 3 uplink-downlink configuration pattern cycles, i.e., 15 slots. "SensingCycle: 10ms" indicates that the sensing cycle is 10ms, meaning it cycles once every 10ms. "SensingOffset: 0" indicates that the starting position of the sensing window is a first OFDM symbol in a first uplink-downlink configuration pattern cycle within the sensing cycle. "SensingType: DL" indicates that a sensing signal is used for a downlink. SensingOccasionInPattern indicates a sensing occasion pattern, that is, in any uplink-downlink configuration pattern cycle within the sensing window, the fifth to tenth OFDM symbols in the first to third slots are time-domain positions used to send a sensing signal.

In 1103, the base station sends the configuration information of the above sensing frame structure to a terminal. Correspondingly, the terminal receives the configuration information of the above sensing frame structure.

In 1104, the base station determines a sending position for a sensing signal.

In 1105, the base station sends a control instruction used to activate sensing to the terminal. Correspondingly, the terminal receives the control instruction.

Taking the control instruction being a MAC CE as an example, a size of the MAC CE is a number of values of 1 in the above pattern data, and content thereof is [111000111000111000]. That is, the base station takes the fifth to seventh OFDM symbols in the first to third slots as time-domain positions for actually sending a sensing signal.

In 1106, the base station performs transmission and reception of a sensing signal.

The sensing signal needs to be transmitted and received at the time-domain position indicated by the MAC CE.

In a case where there is a resource overlap for a sensing signal and a communication signal, for example, there is a resource overlap for the sensing signal and the communication signal on a PDSCH. The base station normally sends the sensing signal, and performs a collision avoidance strategy on the communication signal. That is, the base station sends the sensing signal at the time-domain position where resources overlap, and does not transmit the communication signal. Meanwhile, the terminal also does not receive a signal at the time-domain position where resources overlap, to avoid being affected.

In 1107, in a case where the communication signal collides with the sensing signal, the base station sends a speed rate-matched communication signal.

The base station may perform speed rate matching on the communication signal based on a portion of a time-domain resource that does not overlap with the time-domain resource for the sensing signal, thereby avoiding affecting signal sensing.

In 1108, in a case where sensing ends, the base station sends a control instruction for deactivation to the terminal.

For example, the control instruction may be a MAC CE used to characterize a deactivation indication of a sensing signal.

(2) A base station performs transmission and a terminal performs reception.

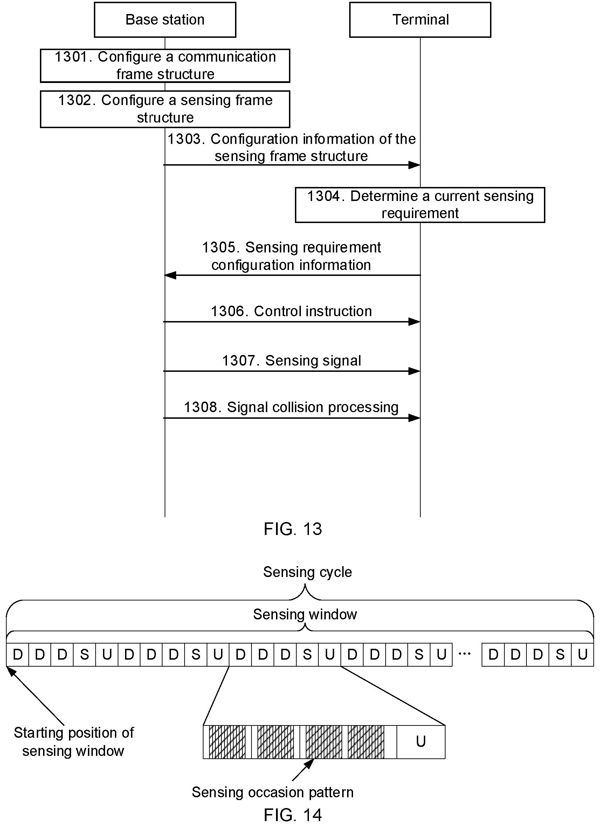

Exemplarily, as shown in FIG. 13, the first node may be a base station, the second node may be a terminal under coverage of a cell of the base station, and the scheme includes 1301-1308.

In 1301, a base station configures a communication frame structure.

For example, a current frame structure used for communication is DDDSU, and specific parameters are as follows:
dl-UL-TransmissionPeriodicity: ms0p625 (which indicates 5 slots of a subcarrier spacing of 120 kHz);
nrofDownlinkSlots: 3
nrofDownlinkSymbols: 10
nrofUplinkSlots: 1
nrofUplinkSymbols: 2

In 1302, the base station configures a sensing frame structure.

Exemplarily, with reference to FIG. 14, the configuration information of the sensing frame structure determined by the base station is as follows:
SensingWindowLength: 8
SensingCycle: 5ms
SensingOffset: 0
SensingType: DL
SensingOccasionInPattern: [
   01111111111110,
   01111111111110,
   01111111111110,
   11111111111100,
   00000000000000,
   ]

Herein, "SensingWindowLength: 8" indicates that the size of the sensing window is 3 uplink-downlink configuration pattern cycles, i.e., 40 slots. "SensingCycle: 5ms" indicates that a sensing cycle is 5 ms. The above communication frame structure defines a slot configuration for slots in a case where a subcarrier spacing is 120 kHz. At this time, one slot occupies 0.125 ms, and therefore the sensing window occupies the entire sensing cycle. "SensingOffset: 0" indicates that the starting position of the sensing window is a first OFDM symbol in a first uplink-downlink configuration pattern cycle within the sensing cycle. "SensingType: DL" indicates that a sensing signal is used for a downlink. SensingOccasionInPattern indicates a sensing occasion pattern, that is, in any uplink-downlink configuration pattern cycle within the sensing window, the second to thirteenth OFDM symbols in the first to third slots and the first to twelfth OFDM symbols in the fourth slot are time-domain positions used to send a sensing signal.

In 1303, the base station sends the configuration information of the above sensing frame structure to a terminal. Correspondingly, the terminal receives the configuration information of the above sensing frame structure.

In 1304, the terminal determines a current sensing requirement.

The terminal may determine sensing requirement configuration information such as a position of a sensing symbol according to the current sensing requirement, so as to facilitate the base station in performing a sensing operation.

In 1305, the terminal sends sensing requirement configuration information to the base station. Correspondingly, the base station receives the sensing requirement configuration information.

The base station may determine an actual sensing signal position according to the sensing requirement configuration information, thereby generating a control instruction.

In 1306, the base station sends a control instruction to the terminal. Correspondingly, the terminal receives the control instruction.

Taking the control instruction being DCI as an example, a size of a corresponding field in the DCI is the number of OFDM symbols included in one slot, i.e., the size of the corresponding field is 14, and content thereof is [01111111111110]. That is, the base station takes the second to thirteenth OFDM symbols in the slot as time-domain positions for actually sending a sensing signal.

In 1307, the base station sends a sensing signal according to the time-domain position dynamically indicated by the DCI, and the terminal performs reception at a corresponding position.

In 1308, the base station performs signal collision processing.

The base station may determine whether a sensing signal and a communication signal are capable of being multiplexed. In a case where they cannot be multiplexed, there is a resource overlap for the sensing signal and a DMRS on a PDSCH. At this time, the base station normally sends the sensing signal, and determines other available time-domain positions for the DMRS. For example, the DMRS is located in the third OFDM symbol, the base station identifies the second OFDM symbol and the fourth OFDM symbol, and upon determining that there is no available position, the base station gives up sending the DMRS.

In addition, an SSB located in the second OFDM symbol also has resource overlap with the sensing signal. At this time, the base station normally sends the SSB, and determines other available time-domain positions for the sensing signal. The base station detects that the first OFDM symbol is available, and therefore takes the first OFDM symbol as a transmission position of the sensing signal, and so on.

(3) A terminal performs transmission and a base station performs reception.

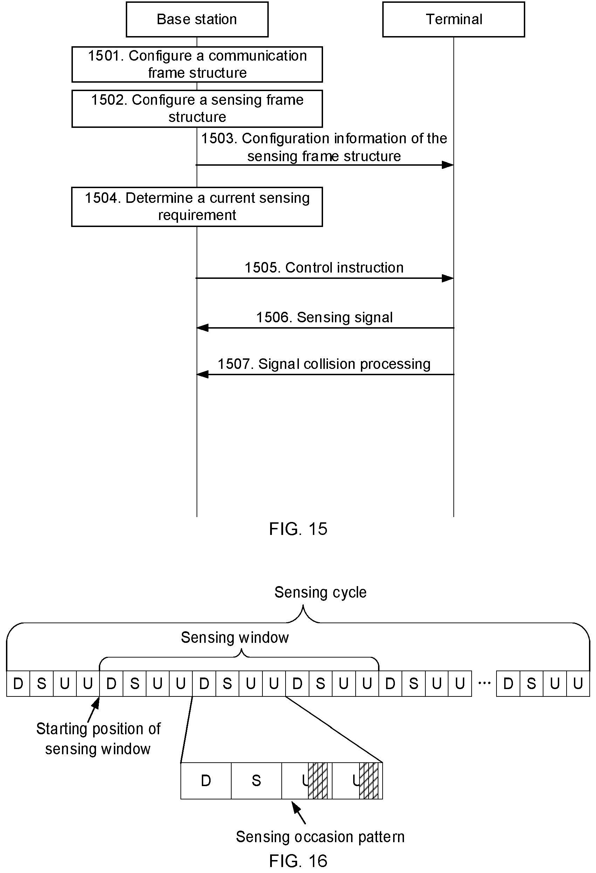

Exemplarily, as shown in FIG. 15, the first node may be a base station, the second node may be a terminal under coverage of a cell of the base station, and the scheme includes 1501-1507.

In 1501, a base station configures a communication frame structure.

For example, a current frame structure used for communication is DSUU, and specific parameters are as follows:
dl-UL-TransmissionPeriodicity: ms0p5 (which indicates 4 slots of a subcarrier spacing of 120 kHz);
nrofDownlinkSlots: 1
nrofDownlinkSymbols: 2
nrofUplinkSlots: 2
nrofUplinkSymbols: 10

In 1502, the base station configures a sensing frame structure.

Exemplarily, with reference to FIG. 16, the configuration information of the sensing frame structure determined by the base station is as follows:
SensingWindowLength:3
SensingCycle:5ms
SensingOffset:1
SensingType:UL
SensingOccasionInPattern: [
   00000000000000,
   00000000000000,
   00000000011110,
   00000000011110,
   ]

Herein, "SensingWindowLength: 3" indicates that the size of the sensing window is 3 uplink-downlink configuration pattern cycles, i.e., 12 slots. "SensingCycle: 5ms" indicates that a sensing cycle is 5 ms. "SensingOffset: 1" indicates that an offset of the sensing window is 1 uplink-downlink configuration pattern cycle, i.e., a starting position is a first OFDM symbol in a second uplink-downlink configuration pattern cycle within the sensing cycle. "SensingType: UL" indicates that a sensing signal is used for a uplink. SensingOccasionInPattern indicates a sensing occasion pattern, that is, in any uplink-downlink configuration pattern cycle within the sensing window, the tenth to thirteenth OFDM symbols in the third to fourth slots are time-domain positions used to send a sensing signal.

In 1503, the base station sends the configuration information of the above sensing frame structure to a terminal. Correspondingly, the terminal receives the configuration information of the above sensing frame structure.

In 1504, the base station determines a current sensing requirement.

After determining the current sensing requirement, the base station may determine an actual sensing signal position according to the sensing requirement, thereby generating a control instruction.

In 1505, the base station sends a control instruction to the terminal. Correspondingly, the terminal receives the control instruction.

Taking the control instruction being DCI as an example, a size of a corresponding field in the DCI is the number of OFDM symbols included in one slot, i.e., the size of the corresponding field is 14, and content thereof is [00000000001110]. That is, the base station takes the eleventh to thirteenth OFDM symbols in the slot as time-domain positions for actually sending a sensing signal.

In 1506, the terminal sends a sensing signal according to the time-domain position dynamically indicated by the DCI, and the base station performs reception at a corresponding position.

In 1507, the terminal performs signal collision processing.

The terminal may determine whether a sensing signal and a communication signal are capable of being multiplexed. For example, an SRS and the sensing signal therein are capable of being multiplexed, and the terminal normally sends the sensing signal.

Secondly, there is a resource overlap for the sensing signal and a signal on a PUSCH, and the terminal takes a result jointly indicated by the configuration information of the sensing frame and the DCI as a time-domain resource for the sensing signal, and takes a bandwidth and a resource element (RE) of the sensing signal as. The terminal sends the sensing signal at a corresponding position, and does not send an effective signal of the PUSCH, and the base station receives the sensing signal at the corresponding position, without receiving the effective signal of the PUSCH.

(4) Base station A performs transmission, and base station B performs reception.

Exemplarily, a current frame structure used for communication is DDDSU, and specific parameters are as follows:
dl-UL-TransmissionPeriodicity: ms0p625 (which indicates 5 slots of a subcarrier spacing of 120 kHz);
nrofDownlinkSlots: 3
nrofDownlinkSymbols: 10
nrofUplinkSlots: 1
nrofUplinkSymbols: 2

In first step, the base station A determines configuration information of a sensing frame as follows:
SensingWindowLength:3
SensingCycle: 10ms
SensingOffset:0
SensingType:DL
SensingOccasionInPattern: [
00001111110000,
00001111110000,
00001111110000,
00000000000000,
00000000000000,
]

In second step, the base station A sends the configuration information of the above sensing frame to a base station B via an Xn interface. Correspondingly, the base station B receives the configuration information of the above sensing frame.

In third step, the base station A sends a control instruction to the base station B.

The base station A may determine the control instruction according to a current sensing target. The base station A and the base station B send control instructions to terminals in respective cells.

Taking a control instruction being DCI as an example, specific parameters are as follows:
Sensing identifier: [111000111000111000]
Sensing active identifier: 1
DRX sleep identifier: 1

In combination with the configuration information of the sensing frame, "Sensing identifier: [111000111000111000]" indicates that the sixth to eighth OFDM symbols in the first to third slots are used for transmission of a sensing signal. "Sensing active identifier: 1" indicates that sensing is activated, and "DRX sleep identifier: 1" indicates that a terminal performs a DRX sleep strategy during sensing.

In fourth step, the base station A sends a sensing signal, and the base station B receives the sensing signal.

In fifth step, after sensing ends, the base station A instructs the base station B to stop sensing via the Xn interface. The base station A and the base station B send deactivation control instructions to terminals in the respective cells.

For example, parameter configuration of a control instruction is as follows:
Sensing identifier: [111000111000111000]
Sensing active identifier: 0
DRX sleep identifier: 0

It can be understood that, in order to implement the above functions, the sensing communication apparatus includes corresponding hardware structures and/or software modules for implementing various functions. Those skilled in the art should easily realize that the present disclosure may be implemented in the form of hardware or a combination of hardware and computer software in combination with algorithms and steps of various examples described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The sensing communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

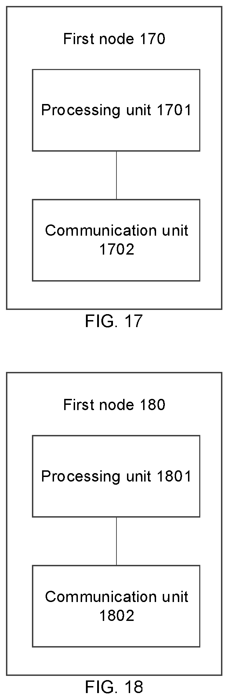

For example, taking a sensing communication apparatus being the first node in the above method embodiments as an example, FIG. 17 is a structural schematic diagram of a first node provided in the embodiments of the present disclosure, and the first node may perform the sensing communication method provided in the above method embodiments. As shown in FIG. 17, the first node 170 includes: a processing unit 1701 and a communication unit 1702.

The processing unit 1701 is configured to determine configuration information of a sensing frame.

The communication unit 1702 is configured to send the configuration information of the sensing frame to a second node.

In some embodiments, the communication unit 1702 is configured to acquire configuration information of a communication frame and a sensing service requirement; and the processing unit 1701 is configured to determine the configuration information of the sensing frame based on the configuration information of the communication frame and the sensing service requirement.

In some embodiments, the configuration information of the sensing frame is used to configure at least one of: a size of a sensing window, a sensing cycle, a starting position of the sensing window, a sensing signal transmission manner, and a sensing occasion pattern; where the sensing occasion pattern is used to indicate a time-domain position of a sensing occasion within the sensing window.

In some embodiments, the communication unit 1702 is configured to send a control instruction to the second node, where the control instruction is used to activate or deactivate a sensing resource.

In some embodiments, the control instruction is downlink control information (DCI) or a media access control-control element (MAC CE).

In some embodiments, the control instruction includes a first bitmap, the first bitmap includes a plurality of indication bits, each indication bit corresponds to a symbol in a slot, and the each indication bit is used to indicate whether there is a sensing signal in the symbol corresponding to the indication bit.

In some embodiments, the control instruction includes at least one of: a second bitmap, first indication information, and second indication information; where the second bitmap includes a plurality of indication bits, each indication bit corresponds to a sensing occasion within the sensing window, and the each indication bit is used to indicate whether there is a sensing signal in the sensing occasion corresponding to the indication bit; the first indication information is used to indicate whether to perform sensing on a sensing occasion where there is a sensing signal; and the second indication information is used to indicate whether to perform a sleep strategy of discontinuous reception (DRX) during a sensing process.

In some embodiments, the control instruction is DCI scrambled by a temporary user identifier used for sensing.

In some embodiments, in a case where the control instruction only includes the second bitmap, the control instruction is a MAC CE.

In some embodiments, the communication unit 1702 is configured to, in a case where a first transmission resource for a sensing signal and a second transmission resource for a communication signal overlap, designate the communication signal as the sensing signal, and send the communication signal on the second transmission resource.

In some embodiments, the communication unit 1702 is configured to, in a case where a first transmission resource for a sensing signal and a second transmission resource for a communication signal overlap, and a priority for the sensing signal is higher than a priority for the communication signal, send the sensing signal on the first transmission resource.

In some embodiments, the processing unit 1701 is configured to perform speed rate matching on the communication signal; and the communication unit 1702 is configured to send the speed rate-matched communication signal on a portion of the second transmission resource that does not overlap with the first transmission resource.

In some embodiments, the communication unit 1702 is configured to send the communication signal on a third transmission resource; the third transmission resource is an available transmission resource that is adjacent to the second transmission resource and does not overlap with the first transmission resource.

In some embodiments, the communication unit 1702 is configured to, in a case where a first transmission resource for a sensing signal and a second transmission resource for a communication signal overlap, and a priority for the sensing signal is lower than a priority for the communication signal, send the sensing signal on a fourth transmission resource; where the fourth transmission resource is an available transmission resource that is adjacent to the first transmission resource and does not overlap with the second transmission resource.

In some embodiments, the first transmission resource includes at least one sensing occasion within the sensing window configured according to the configuration information of the sensing frame.

Taking a sensing communication apparatus being the second node in the above method embodiments as an example, FIG. 18 is a structural schematic diagram of a second node provided in the embodiments of the present disclosure, and the second node may perform the data receiving method provided in the above method embodiments. As shown in FIG. 18, the second node 180 includes: a processing unit 1801 and a communication unit 1802.

The communication unit 1802 is configured to receive configuration information of a sensing frame sent from a first node.

The processing unit 1801 is configured to analyze the configuration information of the sensing frame.

In some embodiments, the configuration information of the sensing frame is used to configure at least one of: a size of a sensing window, a sensing cycle, a starting position of the sensing window, a sensing signal transmission manner, and a sensing occasion pattern; where the sensing occasion pattern is used to indicate a time-domain position of a sensing occasion within the sensing window.

In some embodiments, the communication unit 1802 is configured to receive a control instruction sent from the first node, where the control instruction is used to activate or deactivate a sensing resource.

In some embodiments, the control instruction is downlink control information (DCI) or a media access control-control element (MAC CE).

In some embodiments, the control instruction includes a first bitmap, the first bitmap includes a plurality of indication bits, each indication bit corresponds to a symbol in a slot, and the each indication bit is used to indicate whether there is a sensing signal in the symbol corresponding to the indication bit.

In some embodiments, the control instruction includes at least one of: a second bitmap, first indication information, and second indication information; where the second bitmap includes a plurality of indication bits, each indication bit corresponds to a sensing occasion within the sensing window, and the each indication bit is used to indicate whether there is a sensing signal in the sensing occasion corresponding to the indication bit; the first indication information is used to indicate whether to perform sensing on a sensing occasion where there is a sensing signal; and the second indication information is used to indicate whether to perform a sleep strategy of discontinuous reception (DRX) during a sensing process.

In some embodiments, the control instruction is DCI scrambled by a temporary user identifier used for sensing.

In some embodiments, in a case where the control instruction only includes the second bitmap, the control instruction is a MAC CE.

In some embodiments, the communication unit 1802 is configured to, in a case where a first transmission resource for a sensing signal and a second transmission resource for a communication signal overlap, designate the communication signal as the sensing signal, and send the communication signal on the second transmission resource.

In some embodiments, the communication unit 1802 is configured to, in a case where a first transmission resource for a sensing signal and a second transmission resource for a communication signal overlap, and a priority for the sensing signal is higher than a priority for the communication signal, send the sensing signal on the first transmission resource.

In some embodiments, the processing unit 1801 is configured to perform speed rate matching on the communication signal; and the communication unit 1802 is configured to send the speed rate-matched communication signal on a portion of the second transmission resource that does not overlap with the first transmission resource.

In some embodiments, the communication unit 1802 is configured to send the communication signal on a third transmission resource; where the third transmission resource is an available transmission resource that is adjacent to the second transmission resource and does not overlap with the first transmission resource.

In some embodiments, the communication unit 1802 is configured to, in a case where a first transmission resource for a sensing signal and a second transmission resource for a communication signal overlap, and a priority for the sensing signal is lower than a priority for the communication signal, send the sensing signal on a fourth transmission resource; where the fourth transmission resource is an available transmission resource that is adjacent to the first transmission resource and does not overlap with the second transmission resource.

In some embodiments, the first transmission resource includes at least one sensing occasion within the sensing window configured according to the configuration information of the sensing frame.

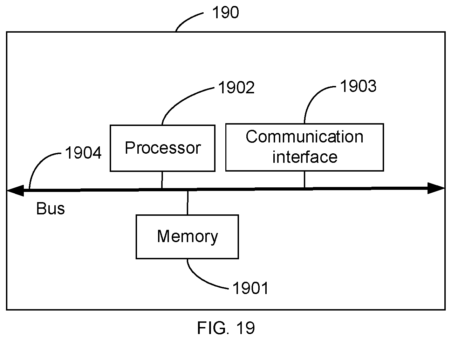

In a case where the functions of the above-mentioned integrated modules are implemented in the form of hardware, structures of another sensing communication apparatus involved in the above-mentioned embodiments is provided in the embodiments of the present disclosure. As shown in FIG. 19, the sensing communication apparatus 190 includes: a memory 1901, a processor 1902, a communication interface 1903, and a bus 1904.

The memory 1901 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1902 may be a logic block, a module, or a circuit that implements or performs various exemplary methods described in combination with the embodiments of the present disclosure. The processor 1902 may be a central processor, a general-purpose processor, a digital signal processor, an application specific integrated circuit, a field programmable gate array, or other programmable logic component, a transistor logic component, a hardware assembly, or any combination thereof. The processor 1902 may be implemented as or be performed as various exemplary logic blocks, modules, and circuits described in combination with the embodiments of the present disclosure. The processor 1902 may also be a combination that implements computing functions, such as a combination containing one or more microprocessors, a combination of a DSP (digital signal processor) and a microprocessor, etc.

The communication interface 1903 is configured to connect to other devices through a communication network. The communication network may be the Ethernet, a radio access network, a wireless local area network (WLAN), or the like.

In some embodiments, the memory 1901 may exist independently from the processor 1902, and the memory 1901 may be connected to the processor 1902 through the bus 1904 for storing instructions or program codes. In a case where the processor 1902 invokes and executes the instructions or program codes stored in the memory 1901, the sensing communication method provided in the embodiments of the present disclosure may be implemented.

In embodiments, the memory 1901 may be integrated with the processor 1902.

The bus 1904 may be an extended industry standard architecture (EISA) bus, or the like. The bus 1904 may be classified as an address bus, a data bus, a control bus, or the like. For ease of representation, only one bold line is used in FIG. 19 for representing the bus 1904, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the sensing communication method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the sensing communication method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A method for integrated sensing and communication, **characterized by** being applied to a first node, wherein the method comprises:
determining configuration information of a sensing frame; and
sending the configuration information of the sensing frame to a second node.

2. The method according to claim 1, wherein determining the configuration information of the sensing frame comprises:
acquiring configuration information of a communication frame and a sensing service requirement; and
determining the configuration information of the sensing frame based on the configuration information of the communication frame and the sensing service requirement.

3. The method according to claim 1, wherein the configuration information of the sensing frame is used to configure at least one of: a size of a sensing window, a sensing cycle, a starting position of the sensing window, a sensing signal transmission manner, and a sensing occasion pattern; wherein the sensing occasion pattern is used to indicate a time-domain position of a sensing occasion within the sensing window.

4. The method according to claim 3, further comprising:
sending a control instruction to the second node, wherein the control instruction is used to activate or deactivate a sensing resource.

5. The method according to claim 4, wherein the control instruction is downlink control information, DCI, or a media access control-control element, MAC CE.

6. The method according to claim 4, wherein the control instruction comprises a first bitmap, the first bitmap comprises a plurality of indication bits, each indication bit corresponds to a symbol in a slot, and the each indication bit is used to indicate whether there is a sensing signal in the symbol corresponding to the indication bit.

7. The method according to claim 4, wherein the control instruction comprises at least one of: a second bitmap, first indication information, and second indication information; wherein the second bitmap comprises a plurality of indication bits, each indication bit corresponds to a sensing occasion within the sensing window, and the each indication bit is used to indicate whether there is a sensing signal in the sensing occasion corresponding to the indication bit; the first indication information is used to indicate whether to perform sensing on a sensing occasion where there is a sensing signal; and the second indication information is used to indicate whether to perform a sleep strategy of discontinuous reception, DRX, during a sensing process.

8. The method according to claim 6 or 7, wherein the control instruction is DCI scrambled by a temporary user identifier used for sensing.

9. The method according to claim 7, wherein in response to the control instruction only comprising the second bitmap, the control instruction is a MAC CE.

10. The method according to claim 1, further comprising:
determining a collision processing rule based on resource configuration information and a priority for a sensing signal, and resource configuration information and a priority for a communication signal; wherein resource configuration information comprises at least one of: a time-domain resource, a frequency-domain resource, and a beam resource; and
performing a signal transmission operation based on the collision processing rule.

11. The method according to claim 10, wherein performing the signal transmission operation based on the collision processing rule comprises:
in response to the resource configuration information for the sensing signal being the same as the resource configuration information for the communication signal, designating the communication signal as the sensing signal, and sending the communication signal according to the resource configuration information.

12. The method according to claim 10, wherein in response to the resource configuration information at least comprising a time-domain resource, performing the signal transmission operation based on the collision processing rule comprises:
in response to a first time-domain resource for the sensing signal and a second time-domain resource for the communication signal overlapping, and the priority for the sensing signal is higher than the priority for the communication signal, sending the sensing signal on the first time-domain resource.

13. The method according to claim 12, further comprising:
performing speed rate matching on the communication signal; and
sending the speed rate-matched communication signal on a portion of the second time-domain resource that does not overlap with the first time-domain resource.

14. The method according to claim 12, further comprising:
sending the communication signal on a third time-domain resource; wherein the third time-domain resource is an available time-domain resource that is adjacent to the second time-domain resource and does not overlap with the first time-domain resource.

15. The method according to claim 10, wherein in response to the resource configuration information at least comprising a time-domain resource, performing the signal transmission operation based on the collision processing rule comprises:
in response to a first time-domain resource for the sensing signal and a second time-domain resource for the communication signal overlapping, and the priority for the sensing signal is lower than the priority for the communication signal, sending the sensing signal on a fourth time-domain resource; wherein the fourth time-domain resource is an available time-domain resource that is adjacent to the first time-domain resource and does not overlap with the second time-domain resource.

16. The method according to any one of claims 12 to 15, wherein the first time-domain resource comprises at least one sensing occasion within a sensing window configured according to the configuration information of the sensing frame.

17. A method for integrated sensing and communication, **characterized by** being applied to a second node, wherein the method comprises:
receiving configuration information of a sensing frame sent from a first node.

18. The method according to claim 17, wherein the configuration information of the sensing frame is used to configure at least one of: a size of a sensing window, a sensing cycle, a starting position of the sensing window, a sensing signal transmission manner, and a sensing occasion pattern; wherein the sensing occasion pattern is used to indicate a time-domain position of a sensing occasion within the sensing window.

19. The method according to claim 18, further comprising:
receiving a control instruction sent from the first node, wherein the control instruction is used to activate or deactivate a sensing resource.

20. The method according to claim 19, wherein the control instruction comprises a first bitmap, the first bitmap comprises a plurality of indication bits, each indication bit corresponds to a symbol in a slot, and the each indication bit is used to indicate whether there is a sensing signal in the symbol corresponding to the indication bit.

21. The method according to claim 19, wherein the control instruction comprises at least one of: a second bitmap, first indication information, and second indication information; wherein the second bitmap comprises a plurality of indication bits, each indication bit corresponds to a sensing occasion within the sensing window, and the each indication bit is used to indicate whether there is a sensing signal in the sensing occasion corresponding to the indication bit; the first indication information is used to indicate whether to perform sensing on a sensing occasion where there is a sensing signal; and the second indication information is used to indicate whether to perform a sleep strategy of discontinuous reception, DRX, during a sensing process.

22. The method according to claim 17, further comprising:
determining a collision processing rule based on resource configuration information and a priority for a sensing signal, and resource configuration information and a priority for a communication signal; wherein resource configuration information comprises at least one of: a time-domain resource, a frequency-domain resource, and a beam resource; and
performing a signal transmission operation based on the collision processing rule.

23. The method according to claim 22, wherein performing the signal transmission operation based on the collision processing rule comprises:
in response to the resource configuration information for the sensing signal being the same as the resource configuration information for the communication signal, designating the communication signal as the sensing signal, and sending the communication signal according to the resource configuration information.

24. The method according to claim 22, wherein in response to the resource configuration information at least comprising a time-domain resource, performing the signal transmission operation based on the collision processing rule comprises:
in response to a first time-domain resource for the sensing signal and a second time-domain resource for the communication signal overlapping, and the priority for the sensing signal is higher than the priority for the communication signal, sending the sensing signal on the first time-domain resource.

25. The method according to claim 24, further comprising:
performing speed rate matching on the communication signal; and
sending the speed rate-matched communication signal on a portion of the second time-domain resource that does not overlap with the first time-domain resource.

26. The method according to claim 24, further comprising:
sending the communication signal on a third time-domain resource; wherein the third time-domain resource is an available time-domain resource that is adjacent to the second time-domain resource and does not overlap with the first time-domain resource.

27. The method according to claim 22, wherein in response to the resource configuration information at least comprising a time-domain resource, performing the signal transmission operation based on the collision processing rule comprises:
in response to a first time-domain resource for the sensing signal and a second time-domain resource for the communication signal overlapping, and the priority for the sensing signal is lower than the priority for the communication signal, sending the sensing signal on a fourth time-domain resource; wherein the fourth time-domain resource is an available time-domain resource that is adjacent to the first time-domain resource and does not overlap with the second time-domain resource.

28. An apparatus for integrated sensing and communication, **characterized by** comprising: a memory and a processor; wherein the memory is coupled to the processor; the memory is configured to store instructions executable for the processor; and the processor, upon executing the instructions, performs the sensing communication method according to any one of claims 1 to 16, or performs the sensing communication method according to any one of claims 17 to 27.

29. A computer-readable storage medium, wherein the computer-readable storage medium stores computer instructions thereon, and in response to the computer instructions being run on a computer, the computer is enabled to perform the sensing communication method according to any one of claims 1 to 16, or to perform the sensing communication method according to any one of claims 17 to 27.
